# EUROPÄISCHE PATENTSCHRIFT

(11) **EP 1 069 039 B1**
(45) Veröffentlichungstag und Bekanntmachung des Hinweises auf die Patenterteilung: **28.01.2004**
(21) Anmeldenummer: 00113632.4
(22) Anmeldetag: 28.06.2000
(51) Int. Cl.: B62M 9/12

(54) **Vordere Gangschaltung für Fahrrad**
Bicycle front derailleur
Dérailleur avant de bicyclette

(30) Priorität: 12.07.1999 DE 19932511
(43) Veröffentlichungstag der Anmeldung: 17.01.2001
(73) Patentinhaber: HANS HELMIG GmbH, D-51491 Overath (DE)
(72) Erfinder: Heymer, Arne, Dr.-Ing., 50767 Köln (DE); Walther, Nico, 52062 Aachen (DE)
(74) Vertreter: Nau, Walter, Dipl.-Ing.

(56) Entgegenhaltungen:
- DE-A- 3 429 276
- DE-U- 9 414 961
- US-A- 5 649 877
- US-A- 5 779 580

## Beschreibung

Die Erfindung betrifft eine Schaltvorrichtung für Kettengetriebe, insbesondere Kettengangschaltungen an Fahrrädern nach dem Oberbegriff des Patentanspruchs 1.

Es ist allgemein bekannt, den Umwerfer zum Versetzen der Kette von einem auf ein anderes Kettenblatt einer Kettenradgruppe an der Tretkurbelmechanik mit einer Kettenführung zu versehen, die mittels Parallelogrammstreben an dem am Fahrradrahmen befestigten Teil angelenkt ist. Das Verschieben der Kettenführung an der Parallelogrammkonstruktion erfolgt üblicherweise durch einen einzigen Betätigungszug, der von einer Betätigungseinheit im Bereich des Lenkers des Fahrrades verstellt wird. Dieser Betätigungszug ist an einer Stelle des Parallelogramms so befestigt, daß durch seine Verkürzung ein Auslenken des Parallelogramms erzielt wird, während ein gegengesetztes Auslenken beim Freigeben des Betätigungszuges durch eine Rückstellfeder bewirkt wird. Deshalb muß beim Verstellen der Kettenführung sowohl eine Kraft zum Verstellen derselben als auch eine Kraft zum Spannen der Rückstellfeder aufgebracht werden.

Es ist weiterhin bekannt, US-PS 5,779,580, eine Strebe des Parallelogramms durch ein Spulenrad zu ersetzen, um welches das Seil des Betätigungszuges geschlungen wird, das auf der gegenüberliegenden Seite wieder zu der Betätigungseinheit zurückgeführt wird, so daß eine doppelte Seilführung gegeben ist. Das Auslenken des Parallelogramms erfolgt in beiden Richtungen durch die Betätigungseinheit und den Betätigungszug, so daß eine Rückstellfeder entfallen kann. Diese Ausgestaltung hat den Nachteil, daß das Spulenrad im Radius so groß sein muß, wie die Länge einer Strebe des Parallelogramms, da das Spulenrad die Strebe ersetzt. Dadurch ist die Anwendungsmöglichkeit dieses Vorschlages begrenzt, da gerade im Bereich des Umwerfers der Bauraum eingeengt ist und das Spulenrad nicht nur in Richtung der Strebe sondern rundum diesen Freiraum benötigt. Desweiteren ist dadurch das Übersetzungsverhältnis zwischen der Betätigungseinheit und der Parallelogrammführung des Umwerfers vorgegeben bzw. eingeschränkt, da die Betätigungseinheit der Länge der Strebe bzw. dem Radius des Spulenrades angepaßt werden muß.

Dokument DE3429276 offenbart eine Kettengangschaltung gemäß dem Oberbegriff des Anspruchs 1.

Aufgabe der vorliegenden Erfindung ist es daher, die Nachteile der vorbekannten Lösungen zu vermeiden und einen Umwerfer und eine Betätigung zur Verfügung zu stellen, die einfach in der Herstellung und in den Kosten und darüberhinaus raumsparend und einfach aufgebaut sind.

Gelöst wird die Aufgabe der Erfindung dadurch, daß mit zumindest einer Strebe des Parallelogramms bzw. eines einem Parallelogramm ähnlichen Bauteils zwei Bauelemente mit Befestigungsstellen zur Befestigung des Seiles des Betätigungszuges in Wirkverbindung stehen, wobei die Befestigungsstellen zu den Drehpunkten der zumindest einen Strebe am Festteil des Umwerfers und/oder an der Kettenführung radial beabstandet sind. Durch diese Ausgestaltung der Erfindung können die Enden des Seiles des Betätigungszuges an den Befestigungsstellen der Bauelemente befestigt bzw. verklemmt werden, so daß eine direkte Betätigung der Kettenführung, z.B. ohne Zuhilfenahme einer Feder, erfolgt. Die Befestigungsstellen können dabei soweit von den Drehpunkten entfernt sein, daß eine gewünschte Übersetzung zwischen der Betätigungseinheit und den Streben per Parallelogrammkonstruktion entsteht und eine optimale Raumanpassung gewährleistet ist. Die Bauelemente können sowohl in den Bereichen der Drehpunkte als auch dazwischen mit radialem Abstand zu den Drehpunkten an den Streben befestigt sein.

In vorteilhafter Ausgestaltung der Erfindung können die Bauelemente als Hebelarme ausgebildet sein, die beidseitig einer Strebe im Bereich des Drehpunktes am Festteil des Umwerfers angeordnet sind. Der Drehpunkt am Festteil des Umwerfers ist insofern günstig, weil dieser Drehpunkt feststeht, so daß keine Verschiebung der Hebelarme eintritt. Bei dieser erfindungsgemäßen Ausgestaltung ergibt sich eine Strebe, die im wesentlichen T-förmig ausgebildet ist. Es sei darauf hingewiesen, daß die Hebelarme nicht einstückig mit der Strebe ausgebildet sein müssen, sie können auch als getrennte(s) Teil(e) ausgebildet sein und mit der Strebe in Wirkverbindung stehen.

Gemäß einer anderen Ausgestaltung der Erfindung sind die Bauelemente als Hebelarme ausgebildet, wobei an beabstandeten Streben je ein Hebelarm vorgesehen ist. Wenn die Hebelarme an den getrennten Streben gegeneinander gerichtet angeordnet sind, dann können die Befestigungsstellen sehr nahe beieinander liegen, so daß die Endbereiche des Betätigungszuges bzw. des Seils des Betätigungszuges dicht aneinanderliegen. In vorteilhafter Weise sind die Hebelarme zur Längsachse der Streben in einem Winkelbereich zwischn 60° und 120° verschwenkt angeordnet, wobei vorzugsweise ein Winkel von 110° unter Bildung eines stumpfen Winkels mit der Strebe vorgesehen ist. Die Führungen des Seils oder die Abstützungen der Hüllen des Betätigungszuges sind zu den Befestigungsstellen des Seils am jeweiligen Hebelarm räumlich vorzugsweise so gewählt, daß das Seil zu dem entsprechenden Hebelarm in der Mittelstellung des Umwerfers in einem Winkel von ca. 90° angeordnet ist. Dadurch ergeben sich für die Verstellung der Kettenführung günstige Kräfte- und Raumverhältnisse.

In vorteilhafter Weise sind die Streben in Längsrichtung zueinander versetzt angeordnet, wobei die eine Strebe kopfseitig und die andere Strebe seitlich an der Kettenführung angelenkt sind. Diese Ausgestaltung des Umwerfers ist räumlich sehr günstig. Darüber hinaus lassen sich die Hebelarme und die Streben günstig zueinander anordnen.

Je nach Anordnung und Ausgestaltung der Hebelarme und des Betätigungszuges kann es günstig bzw. erforderlich sein, ein elastisches Element im Betätigungszug vorzusehen, wobei das elastische Element als Zugfeder im Bereich des Seiles bzw. als Druckfeder im Bereich der Hülle des Betätigungszuges vorgesehen sein kann. In vorteilhafter Weise ist im Betätigungszug auch eine Längenverstelleinrichtung, insbesondere in Form einer Einstellgewindebuchse vorgesehen, in der sich die Hülle des Betätigungszuges abstützen kann. Durch diese Einstellgewindebuchse in Verbindung mit dem elastischen Element kann nicht nur eine Vorspannung des Betätigungszuges erzeugt werden, so daß eine spielfreie Betätigung des Umwerfers gewährleistet ist, sondern auch ein Verstellen des Umwerfers bzw. der Kettenführung gegenüber der Betätigungseinheit bzw. deren Rastung und eben eine Längendehnungsmöglichkeit.

Je nach Ausgestaltung der Erfindung können sowohl ein Betätigungszug mit einem Seil und zwei oder mehr Hüllen vorgesehen sein, oder auch zwei getrennte Betätigungszüge mit je einem Seil und je einer oder mehreren Hüllen. Im ersten Fall wird das Seil an der Betätigungseinheit und die freien Enden des Seiles an den Befestigungsstellen befestigt. Im anderen Fall werden die Enden der Seile der Betätigungszüge an der Betätigungseinheit eingehängt oder eingeklemmt und an den Befestigungsstellen eingeklemmt oder umgekehrt.

Zur weiteren Ausgestaltung der Erfindung wird auf die Zeichnungen verwiesen, in denen mehrere Ausgestaltungen der Erfindung vereinfacht dargestellt sind.

Es zeigen:
- Figur 1:: eine Seitenansicht eines Umwerfers mit Teilansicht des Rahmens des Fahrrades und der Seile der Betätigungszüge,
- Figur 2:: eine Ansicht gemäß Figur 1, bei der die Bauelemente mit Befestigungspunkten modifiziert sind,
- Figur 3:: eine Ansicht ähnlich Figur 1 mit weiterer Modifikation der Bauelemente mit Befestigungspunkten,
- Figur 4:: eine Ansicht entsprechend Figur 1, wobei allerdings die Seile und Betätigungszüge detaillierter dargestellt und eine Betätigungseinheit skizziert ist und
- Figur 5:: eine Ansicht gemäß Figur 4 mit einer Modifikation an einem Betätigungszug.

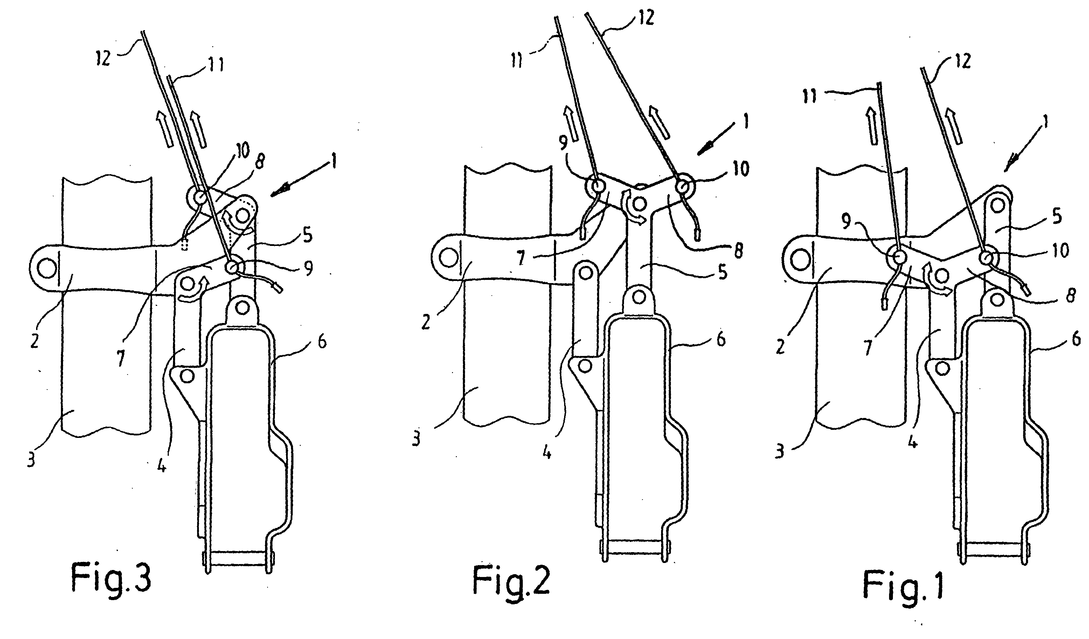

In den Figuren 1 bis 5 ist, soweit im einzelnen dargestellt, mit 1 ein Umwerfer bezeichnet, der mittels eines Festteils 2 am Rahmen 3 eines nicht dargestellten Fahrrades befestigt ist. An dem Festteil 2 sind Streben 4 und 5 angelenkt, an deren dem Festteil abgewandten Enden eine Kettenführung 6 gelagert ist.
Durch Verschwenken der Streben 4 und 5 bewegt sich die Kettenführung 6 parallel (Parallelogrammführung) zum Rahmen 3 hin oder vom Rahmen 3 weg, wodurch ein Umsetzen einer nicht dargestellten Kette vom einen zum anderen Kettenblatt einer ebenfalls nicht dargestellten Kettenradgruppe erfolgt.

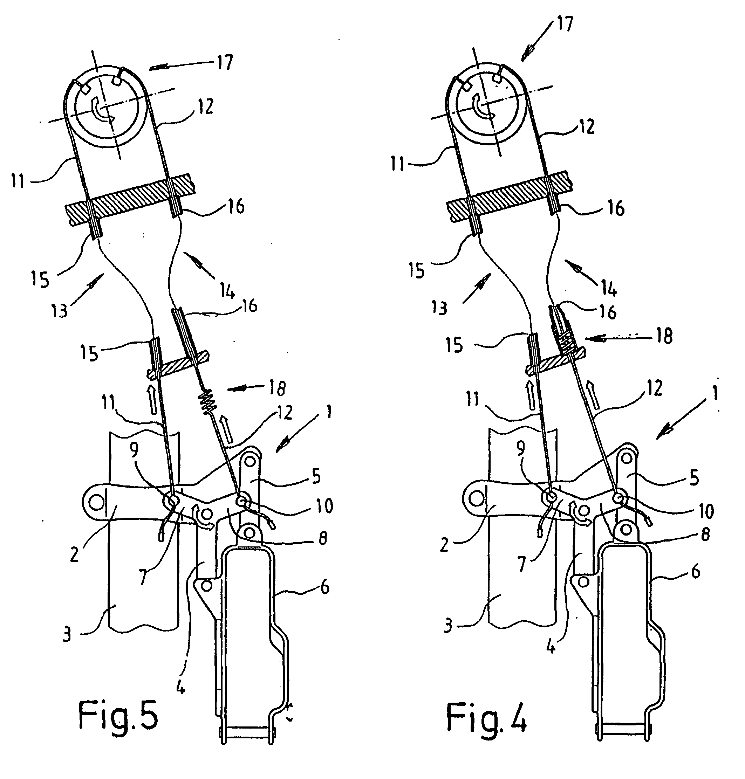

In Figur 1 sind an der Strebe 4 zwei Hebelarme 7 und 8 befestigt, die an ihren Enden Befestigungsstellen 9 und 10 aufweisen, an denen Seile 11 und 12 befestigt sind, die zu in den Figuren 4 und 5 dargestellten Betätigungszügen 13 und 14 gehören. Die Betätigungszüge 13 und 14 weisen außer den Seilen noch Hüllen 15 und 16 auf, die sich an Feststellen des Fahrrades, wie beispielsweise am Rahmen oder am Lenker abstützen. Die Seile 11 und 12 führen, wie wiederum in den Figuren 4 und 5 dargestellt, zu einer Betätigungseinheit 17, die vorzugsweise am Lenker des Fahrrades in Griffnähe des Fahrers angebracht ist.
Wie den Pfeilen in den Figuren 1 bis 5 zu entnehmen ist, verschwenken beim Drehen der Betätigungseinheit 17 die Hebelarme 7 und 8 um ihre Anlenkpunkte am Festteil 2, wodurch in den Figuren 1, 4 und 5 die Strebe 4 und in Figur 2 die Strebe 5 verschwenkt wird, was wegen der Parallelogrammführung zu einer Hin- und Herbewegung der Kettenführung 6 führt.

Im Ausführungsbeispiel gemäß Figur 3 sind die Hebelarme 7 und 8 jeweils einzeln an je einer Strebe 4 und 5 angebracht, wobei die Hebelarme zueinander ausgerichtet sind, so daß die Seile 11 und 12 bzw. die Betätigungszüge 13 und 14 sehr nahe aneinander angebracht werden können.

In den Ausführungsbeispielen gemäß den Figuren 1 bis 5 sind die Hebelarme zu der jeweiligen Strebe bzw. zu den jeweiligen Streben etwa in einem stumpfen Winkel von 110° zu der bzw. den Streben angebracht, wodurch eine günstige räumliche und kräftemäßige Anlenkung der Streben erfolgt.

Wie weiterhin den Figuren zu entnehmen ist, kann durch die Freizügigkeit bei der Anbringung der Hebelarme an der einen bzw. anderen Strebe oder an beiden Streben und durch ihre Länge und winkelmäßige Anlenkung den räumlichen Gegebenheiten voll Rechnung getragen werden und eine große Variationsbreite erreicht werden.

Je nach kinematischer Auslegung der Hebelarme 7 und 8 in Verbindung mit der Betätigungseinheit 17 kann es vorteilhaft sein, daß in zumindest einem der Betätigungszüge ein elastisches Element 18 eingebaut ist.
Im Ausführungsbeispiel gemäß Figur 4 ist dies eine Druckfeder, die zwischen der Hülle 16 und der Feststelle vorgesehen ist, während in Figur 5 eine Zugfeder in das Seil 12 eingebaut ist.

## Patentansprüche

1. Schaltvorrichtung für Kettengetriebe, insbesondere Kettengangschaltungen an Fahrrädern, wobei die Kette zwischen zumindest einem Zahnkranz an einem Rad des Fahrrades und einer Kettenradgruppe mit mehreren Kettenblättern an der Tretkurbelmechanik angeordnet ist, wobei am Rahmen (3) des Fahrrades abgestützt ein Umwerfer (1) vorgesehen ist, dessen Kettenführung (6) über zumindest zwei Streben (4 und 5) eines Parallelogramms bzw. eines einem Parallelogramm ähnlichen Bauteils zum Wechseln der Kette von einem Kettenblatt zum anderen verschiebbar ist, und wobei die Verschiebung der Kettenführung (6) mittels einer Betätigungseinheit (17) im Bereich der Hände des Fahrradfahrers erfolgt, die durch das Seil (11, 12) zumindest eines Betätigungszuges (13, 14) mit dem Umwerfer (1) in Wirkverbindung steht,
***dadurch gekennzeichnet, daß*** mit zumindest einer Strebe (4 oder 5) zwei Bauelemente (7 und 8) mit Befestigungsstellen (9, 10) zur Befestigung des Seiles (11, 12) des Betätigungszuges (13, 14) in Wirkverbindung stehen, wobei die Befestigungsstellen (9, 10) zu den Drehpunkten der zumindest einen Strebe (4 oder 5) am Festteil (2) des Umwerfers (1) und/oder an der Kettenführung (6) radial beabstandet sind.

2. Schaltvorrichtung für Kettengetriebe nach Anspruch 1,
***dadurch gekennzeichnet, daß*** die Bauelemente als Hebelarme (7 und 8) ausgebildet sind, die beidseitig einer Strebe (4 oder 5) im Bereich des Drehpunktes am Festteil (2) des Umwerfers (1) angeordnet sind.

3. Schaltvorrichtung für Kettengetriebe nach Anspruch 1,
***dadurch gekennzeichnet, daß*** die Bauelemente als Hebelarme (7 und 8) ausgebildet sind, wobei an beabstandeten Streben (4 und 5) je ein Hebelarm (7, 8) vorgesehen ist.

4. Schaltvorrichtung für Kettengetriebe nach Anspruch 3,
***dadurch gekennzeichnet, daß*** die Hebelarme (7 und 8) an den Streben (4 und 5) gegeneinander gerichtet angeordnet sind.

5. Schaltvorrichtung für Kettengetriebe nach einem der vorhergehenden Ansprüche,
***dadurch gekennzeichnet, daß*** die Hebelarme (7 und 8) in einem Winkelbereich von 60° bis 120° zur Längsachse der Streben (4 und 5), vorzugsweise um einen Winkel von 110° unter Bildung eines stumpfen Winkels mit der Strebe (4 und 5), ausgebildet sind.

6. Schaltvorrichtung für Kettengetriebe nach einem der vorhergehenden Ansprüche,
***dadurch gekennzeichnet, daß*** die Führungen des Seils (11, 12) oder die Abstützungen der Hüllen (15, 16) des Betätigungszuges (13, 14) zu den Befestigungsstellen (9, 10) des Seils am jeweiligen Hebelarm (7, 8) bezüglich ihrer räumlichen Anordnung so gewählt sind, daß das Seil (11, 12) zu dem entsprechenden Hebelarm (7, 8) in der Mittelstellung des Umwerfers (6) in einem Winkel von 90° angeordnet ist.

7. Schaltvorrichtung für Kettengetriebe nach einem der vorhergehenden Ansprüche,
***dadurch gekennzeichnet, daß*** die Streben (4 und 5) in Längsrichtung zueinander versetzt angeordnet sind, wobei die eine Strebe (5) kopfseitig und die andere Strebe (4) seitlich an der Kettenführung (6) angelenkt sind.

8. Schaltvorrichtung für Kettengetriebe nach einem der vorhergehenden Ansprüche,
***dadurch gekennzeichnet, daß*** im Betätigungszug (13 oder 14) ein elastisches Element (18) eingebaut ist.

9. Schaltvorrichtung für Kettengetriebe nach einem der vorhergehenden Ansprüche,
***dadurch gekennzeichnet, daß*** im Betätigungszug (13 oder 14) eine Längenverstelleinrichtung vorgesehen ist.

10. Schaltvorrrichtung für Kettengetriebe nach einem der vorhergehenden Ansprüche,
***dadurch gekennzeichnet, daß*** zwei getrennte Betätigungszüge (13 und 14) mit je einem Seil (11 und 12) vorgesehen sind, die zumindest teilweise von Hüllen (15 und 16) umgeben sind.

11. Schaltvorrichtung für Kettengetriebe nach einem der vorhergehenden Ansprüche,
***dadurch gekennzeichnet, daß*** das elastische Element (18) in den Betätigungszug bzw. Betätigungszugteil bei einem Betätigungszug eingebaut ist, durch dessen Betätigung die Kette auf das Kettenblatt bzw. die Kettenblätter mit kleinerem Durchmesser geschaltet wird.

## Claims

1. Gear-changing device for chain gears, in particular gear changes on bicycles, the chain being arranged between at least one toothed rim on a wheel of the bicycle and a sprocket wheel assembly with a plurality of chain leaves on the pedal crank mechanism, a derailleur (1) being provided supported on the frame (3) of the bicycle, the chain guide (6) of which can be displaced via at least two struts (4 and 5) of a parallelogram or of a component similar to a parallelogram from one chain leaf to the other in order to change the chain, and the displacement of the chain guide (6) taking place by means of an actuating unit (17) in the region of the cyclist's hands, the said unit being operatively connected to the derailleur (1) by the cable (11, 12) of at least one actuating pull (13, 14), **characterized in that** two structural elements (7 and 8) having fastening points (9, 10) for the fastening of the cable (11, 12) of the actuating pull (13, 14) are operatively connected to at least one strut (4 or 5), the fastening points (9, 10) being spaced apart radially from the pivot points of the at least one strut (4 or 5) on the fixed part (2) of the derailleur (1) and/or on the chain guide (6).

2. Gear-changing device for chain gears according to Claim 1, **characterized in that** the structural elements are designed as lever arms (7 and 8) which are arranged on the fixed part (2) of the derailleur (1) in the region of the pivot point on both sides of a strut (4 or 5).

3. Gear-changing device for chain gears according to Claim 1, **characterized in that** the structural elements are designed as lever arms (7 and 8), respective lever arms (7, 8) being provided on spaced apart struts (4 and 5).

4. Gear-changing device for chain gears according to Claim 3, **characterized in that** the lever arms (7 and 8) are arranged in opposite directions on the struts (4 and 5).

5. Gear-changing device for chain gears according to one of the preceding claims, **characterized in that** the lever arms (7 and 8) are formed in an angular range of 60° to 120° with respect to the longitudinal axis of the struts (4 and 5), preferably around an angle of 110° forming an obtuse angle with the strut (4 and 5).

6. Gear-changing device for chain gears according to one of the preceding claims, **characterized in that** the guides of the cable (11, 12) or the supports of the sheaths (15, 16) of the actuating pull (13, 14) are selected with regard to their spatial arrangement with respect to the fastening points (9, 10) of the cable on the particular lever arm (7, 8) in such a manner that, in the central position of the derailleur (6), the cable (11, 12) is arranged at an angle of 90° with respect to the corresponding lever arm (7, 8).

7. Gear-changing device for chain gears according to one of the preceding claims, **characterized in that** the struts (4 and 5) are arranged offset with respect to each other in the longitudinal direction, the one strut (5) being coupled at the top end and the other strut (4) being coupled laterally to the chain guide (6).

8. Gear-changing device for chain gears according to one of the preceding claims, **characterized in that** an elastic element (18) is fitted in the actuating pull (13 or 14).

9. Gear-changing device for chain gears according to one of the preceding claims, **characterized in that** a length adjustment device is provided in the actuating pull (13 or 14).

10. Gear-changing device for chain gears according to one of the preceding claims, **characterized in that** two separate actuating pulls (13 and 14) having a respective cable (11 and 12) are provided and are at least partially surrounded by sheaths (15 and 16).

11. Gear-changing device for chain gears according to one of the preceding claims, **characterized in that** the elastic element (18) is fitted into the actuating pull or actuating pull part in an actuating pull, the actuation of which causes the chain to be changed onto the chain leaf or the chain leaves having a smaller diameter.

## Revendications

1. Dispositif de sélection de vitesses pour mécanismes d'entraînement à chaîne, notamment changements de vitesses à chaîne de bicyclettes, dans lequel la chaîne est disposée entre au moins un pignon sur une roue de la bicyclette et un groupe de roues dentées comprenant plusieurs plateaux sur le mécanisme du pédalier, un dérailleur (1) fixé sur le cadre (3) de la bicyclette étant prévu, dont le guide de la chaîne (6) peut être déplacé par le biais d'au moins deux montants (4 et 5) d'un parallélogramme ou d'un composant similaire à un parallélogramme pour faire passer la chaîne d'un plateau sur un autre, et le déplacement du guide de la chaîne (6) s'effectuant au moyen d'une unité d'actionnement (17) dans la région des mains du cycliste, laquelle est en liaison coopérante par le câble (11, 12) d'au moins un train d'actionnement (13, 14) avec le dérailleur (1),
**caractérisé en ce que** deux éléments constructifs (7 et 8) avec des points de fixation (9, 10) pour la fixation du câble (11, 12) du train d'actionnement (13, 14) sont en liaison coopérante avec au moins un montant (4 ou 5), les points de fixation (9, 10) étant radialement espacés des points de pivot de l'au moins un montant (4 ou 5) sur la partie fixe (2) du dérailleur (1) et/ou sur le guide de la chaîne (6).

2. Dispositif de sélection de vitesses pour mécanismes d'entraînement à chaîne selon la revendication 1,
**caractérisé en ce que** les éléments constructifs sont réalisés sous forme de bras de levier (7 et 8), qui sont disposés de part et d'autre d'un montant (4 ou 5) dans la région du point de pivot au niveau de la partie fixe (2) du dérailleur (1).

3. Dispositif de sélection de vitesses pour mécanismes d'entraînement à chaîne selon la revendication 1,
**caractérisé en ce que** les éléments constructifs sont réalisés sous forme de bras de levier (7 et 8), un bras de levier (7, 8) étant à chaque fois prévu sur des montants espacés (4 et 5).

4. Dispositif de sélection de vitesses pour mécanismes d'entraînement à chaîne selon la revendication 3,
**caractérisé en ce que** les bras de levier (7 et 8) sont disposés de manière à être orientés à l'opposé l'un de l'autre sur les montants (4 et 5).

5. Dispositif de sélection de vitesses pour mécanismes d'entraînement à chaîne selon l'une quelconque des revendications précédentes,
**caractérisé en ce que** les bras de levier (7 et 8) sont réalisés dans une plage angulaire de 60° à 120° par rapport à l'axe longitudinal des montants (4 et 5), de préférence suivant un angle de 110° en formant un angle obtus avec les montants (4 et 5).

6. Dispositif de sélection de vitesses pour mécanismes d'entraînement à chaîne selon l'une quelconque des revendications précédentes,
**caractérisé en ce que** les guides du câble (11, 12) ou les supports des gaines (15, 16) du train d'actionnement (13, 14) par rapport aux points de fixation (9, 10) du câble sur le bras de levier respectif (7, 8) par rapport à leur agencement spatial, sont choisis de telle sorte que le câble (11, 12) soit disposé par rapport au bras de levier correspondant (7, 8) en position centrale du dérailleur (1) dans un angle de 90°.

7. Dispositif de sélection de vitesses pour mécanismes d'entraînement à chaîne selon l'une quelconque des revendications précédentes,
**caractérisé en ce que** les montants (4 et 5) sont disposés de manière décalée l'un par rapport à l'autre dans la direction longitudinale, l'un des montants (5) étant articulé au niveau de la tête et l'autre montant (4) étant articulé latéralement au guide de la chaîne (6).

8. Dispositif de sélection de vitesses pour mécanismes d'entraînement à chaîne selon l'une quelconque des revendications précédentes,
**caractérisé en ce qu'**un élément élastique (18) est intégré dans le train d'actionnement (13 ou 14).

9. Dispositif de sélection de vitesses pour mécanismes d'entraînement à chaîne selon l'une quelconque des revendications précédentes,
**caractérisé en ce qu'**un dispositif de réglage en longueur est prévu dans le train d'actionnement (13 ou 14).

10. Dispositif de sélection de vitesses pour mécanismes d'entraînement à chaîne selon l'une quelconque des revendications précédentes,
**caractérisé en ce que** deux trains d'actionnement séparés (13 et 14) sont pourvus chacun d'un câble (11 et 12), qui sont entourés au moins partiellement de gaines (15 et 16).

11. Dispositif de sélection de vitesses pour mécanismes d'entraînement à chaîne selon l'une quelconque des revendications précédentes,
**caractérisé en ce que** l'élément élastique (18) est intégré dans le train d'actionnement ou dans la partie du train d'actionnement d'un train d'actionnement, dont l'actionnement fait passer la chaîne au plateau ou aux plateaux de plus petit diamètre.
